# EUROPÄISCHE PATENTSCHRIFT

(11) **EP 1 282 282 B1**
(45) Veröffentlichungstag und Bekanntmachung des Hinweises auf die Patenterteilung: **30.05.2007**
(21) Anmeldenummer: 02100780.2
(22) Anmeldetag: 04.07.2002
(51) Int. Cl.: H04L 29/06, H04L 12/46

(54) **Verfahren zur Bildung eines Ad-hoc-Netzwerkes**
Method for establishing an ad-hoc network
Procédé pour établir un réseau ad-hoc

(30) Priorität: 03.08.2001 DE 10138266
(43) Veröffentlichungstag der Anmeldung: 05.02.2003
(73) Patentinhaber: SIEMENS AKTIENGESELLSCHAFT, 80333 München (DE)
(72) Erfinder: Frank, Michael, 81371 München (DE); Rieken, Ralf, Reston, VA 20190 (US)

(56) Entgegenhaltungen:
- EP-A- 0 800 320
- EP-A- 1 102 500
- EP-A- 1 117 036
- WO-A-01/01711
- WO-A-01/48977
- WO-A-01/76154
- WO-A-96/36193
- WO-A-98/19479
- US-A- 5 555 376
- ALAN KAMINSKY: "JiniME: Jini Connection Technology for Mobile devices" INFORMATION TECHNOLOGY LABORATORY WHITE PAPER, [Online] 3. - 3. August 2000, Seiten 1-26, XP002253531 Rochester Institute of Technology Gefunden im Internet: <URL:http://www.cs.rit.edu/~anhinga/whitep apers/JiniMEWhitePaper/printable.html> [gefunden am 2003-09-04]
- W. KASTNER, C. KRÜGEL: "IMPROVED FIELDBUS CONTROL VIA MIDDLEWARE TECHNOLOGY" 4TH CONFERENCE ON AUTOMATIC CONTROL, [Online] 31. - 31. Oktober 2000, Seiten 604-609, XP002253532 Portugal Gefunden im Internet: <URL:http://www.infosys.tuwien.ac.at/Staff /chris/doc/2000_03.pdf> [gefunden am 2003-09-04]
- GERD ASCHEMANN, ROGER KEHR, ANDREAS ZEIDLER: "A Jini-based Gateway Architecture for Mobile Devices" JIT '99, [Online] 20. - 21. September 1999, Seiten 1-10, XP002253533 Düsseldorf Gefunden im Internet: <URL:http://www.dvs1.informatik.tu-darmsta dt.de/research/percom/publications/jit99.p df> [gefunden am 2003-09-04]
- GUTTMAN E ET AL: "Automatic discovery of thin servers: SLP, Jini and the SLP-Jini Bridge" INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US, 29. November 1999 (1999-11-29), Seiten 722-727, XP010366641 ISBN: 0-7803-5735-3
- ASCHEMANN G ; DOMNITCHEVA S ; HASSELMEYER P ; KEHR R ; ZEIDLER A: "A Framework for the Integration of Legacy Devices into a Jini Management Federation" 10TH IFIP/IEEE INTERNATIONAL WORKSHOP ON DISTRIBUTED SYSTEMS: OPERATIONS AND MANAGEMENT, DSOM'99, [Online] 11. - 13. Oktober 1999, Seiten 257-268, XP002253534 Zürich (Switzerland) Gefunden im Internet: <URL:http://www.inf.ethz.ch/vs/publ/papers /dsom99.pdf> [gefunden am 2003-09-04]
- EUSTICE K F ET AL: "A universal information appliance" IBM SYSTEMS JOURNAL, IBM CORP. ARMONK, NEW YORK, US, Bd. 38, Nr. 4, 1999, Seiten 575-601, XP002157988 ISSN: 0018-8670
- "SPECIFICATION OF THE BLUETOOTH SYSTEM, PROFILES, VERSION 1.0 B, SERVICE DISCOVERY APPLICATION PROFILE" BLUETOOTH SPECIFICATION (V 1.0B), 1. Dezember 1999 (1999-12-01), XP002176976 Gefunden im Internet: <URL:www.bluetooth.com> [gefunden am 2001-09-07]

## Beschreibung

Die Erfindung betrifft ein Verfahren zur Bildung eines Ad-hoc-Netzwerks als Verbindung zwischen einem lokalen Netzwerk mit seinen Diensten und mindestens einem Körpernetzwerk.

Es ist bekannt, daß Netzwerke heutzutage in der Regel zentral administriert werden. Fügt man ein neues Netzelement hinzu, so muß sichergestellt sein, daß es sich mit den bereits vorhandenen Netzelementen "versteht", also die richtige Schnittstelle zum Netz und die richtigen Treiber hat. Ein Schritt in der Entwicklung der Netzwerke ist daher die Weiterentwicklung des sogenannten "Plug & Play" in Form der sogenannten "ad- hoc"-Netzwerke. Eine Beschreibung dieses neuartigen Netztyps, der in der Zukunft sicher an Bedeutung gewinnen wird, findet sich beispielsweise in dem-Artikel "Geistreiche Verbindungen, Intelligente Geräte in dezentralen Netzen". Eine spezielle Ausbildung eines Ad-hoc-Netzwerkes ist das Jini^{™}, dessen Architektur und Mechanismen in dem Technical White Paper "Jini^{™} Architectural Overview" von Sun Microsystems beschrieben sind.

Ad-hoc Netze, wie das von Jini^{™}, zeichnen sich dadurch aus, daß Netzelemente, und damit auch die von ihnen angebotene Dienste, beliebig in ein Netz eingefügt und wieder aus diesem entfernt werden können.

Unter Diensten versteht man hier allgemein eine Instanz, die von einer Person, einem Programm oder einem anderen Dienst benutzt werden kann. Es kann sich um Hardware, Software, Filter, einen Kommunikationskanal, Speicherplatz und vieles andere mehr handeln. Zur Durchführung eines Auftrags können viele einzelne Dienste erforderlich sein.

Die zentrale Steuerung wird durch sogenannte schwarze Bretter (Blackboards) übernommen. Netzelemente können dem schwarzen Brett ihre Existenz und ihre Fähigkeiten mitteilen (Join) und nach Diensten suchen, die Fähigkeiten anbieten können (lookup, discovery). Für die Benutzung der Dienste wird ein Leasing-Mechanismus angeboten, hier wird zwischen den beteiligten Instanzen eine Benutzungsdauer vereinbart, nach deren Ablauf die Ressourcen des benutzten Dienstes wieder freigegeben werden. Die Kommunikation zwischen Diensten kann mittels Java Remote Method Invocation (RMI^{™}) erfolgen.

Aus der Abhandlung "JiniME: Jini^{™} for Connection Technology for Mobile Devices" von Alan Kaminsky vom 3. August 2000, als Webseite zu Beziehen unter http://www.cs.rit.edu/-onhinga/whitepapers/JiniWhitePaper/printable.html, ist eine Erweiterung der Jini^{™}-Technologie für den Einsatz bei mobilen, über Funkverbindung angebundenen Endgeräten bekannt. Hierbei kann auf Jini^{™}-Dienste eines Netzwerks außerhalb eines jeweiligen mobilen Endgeräts mittels einer so genannte Jini-Bridge zugegriffen werden, die sich als Zugangsknoten zum Netzwerk auszeichnet.

Aus der US-Patentschrift US 5,555,376 A ist darüber hinaus bekannt, dass mobile Benutzer Geräte einer Infrastruktur abhängig von einer aktuellen Position des mobilen Benutzers mittels eines mobilen Geräts steuern können. Hierbei werden je Raum eines Gebäudes Sende-/Empfangsgeräte bereitgestellt, um die Position eines mobilen Gerätes - insbesondere mittels Infrarot - im Gebäude zu bestimmen.

Das Problem des Standes der Technik besteht nun darin, die Jini-Technologie in den Komplex eines lokalen Netzwerkes einzubinden und damit ein Ad-hoc-Netzwerk zu schaffen, das den über Jini eingebundenen Geräten auch einen sinnvollen Zugriff auf vorhandene Infrastruktur ermöglicht.

Es ist daher Aufgabe der Erfindung, dieses Problem des Standes der Technik zu lösen und die Jini-Technologie in den Komplex eines lokalen Netzwerkes einzubinden und damit ein Ad-hoc-Netzwerk zu schaffen, das den über Jini eingebundenen Geräten auch einen sinnvollen Zugriff auf vorhandene Infrastruktur ermöglicht.

Diese Aufgabe wird durch die Merkmale des Patentanspruches 1 gelöst. Vorteilhafte Weiterbildungen der Erfindung sind Gegenstand untergeordneter Ansprüche.

Beim Ad-hoc-Networking, also der Bildung von Ad-hoc-Netzwerken und dem Betrieb dieser Netzwerke, wird das Zusammenspiel bestehender Infrastrukturen mit den Körpernetzwerken einerseits und raumspezifischen Infrastrukturen andererseits mit einem einfachen Plug-and-Play ermöglicht. Zu den bestehenden Infrastrukturen zählen beispielsweise lokale Netze (LAN), die in einem Unternehmensbereich oder auch im Bereich von öffentlichen Gebäuden (z.B. Flughafen, Bahnhof, Ausstellungen, Kaufhäusern etc.) Dienste wie das Drucken, den Zugang zu eMail-Servern, den Zugang zum Internet oder Intranet oder auch den Zugriff zu Verzeichnissen und Informationsdateien, wie sogenannte Corporate Directory oder ähnliche Dienste, ermöglichen.

Unter Körpernetzwerk sind hier alle "am Mann"-getragene elektronischen Geräte, wie beispielsweise ein Handy, ein Notebook, eine digitale Kamera, ein Organizier oder ein PDA etc., zu verstehen.

Ein Raumnetz ist definiert mit allen raumspezifischen Geräten, wie beispielsweise einem dort vorhandenem Faxgerät, einem Beamer, ein Telefon oder auch der Zugriff auf eine raumspezifische Beleuchtungsanlage, eine Audio/Video-Anlage oder Gebäudeautomatisationstechniken wie Klimanlage, Fensterbeschattung etc.

Erfindungsgemäß wird also angestrebt, dass sich beispielsweise in einem Unternehmensbereich firmeneigene und firmenfremde Mitarbeiter zu einer Besprechung treffen und hierbei eigene Geräte, verbunden mit der firmeneigenen und firmenfremden Infrastruktur, und den im Raum befindlichen Geräten nutzen können. So soll beispielsweise das Drucken eines Dokumentes, das sich auf einem mitgebrachten Notebook befindet, das Wählen einer Telefonnummer am Handy über das Corporate Directory, das Ausdrucken eines am Handy empfangenen Faxes oder eines eMail-Attachments am nächst gelegenen Drucker möglich sein. Entsprechend soll auch ein eMail-Dienst, der Zugang zum Internet und Intranet an den mitgebrachten Notebooks verfügbar sein und hierüber auch eine gemeinsame Bearbeitung von Dokumenten auf den mitgebrachten Notebooks und eine Präsentation auf den im Raum befindlichen Beamer dargestellt werden können. Ebenfalls soll die Möglichkeit bestehen, dass auch firmenfremde Mitarbeiter online Zugang zum Intranet der fremden Firma aufbauen können.

Derartige Dienste sind heutzutage nur durch problematisches und individuelles Einbinden der genannten Geräte in eine Netzstruktur, unter Verwendung von Treibersoftware und Kenntnisse über Art und Ort der zur Verfügung stehenden Dienste oder Administrationen mit Zugangsrechten, möglich.

Erfindungsgemäß schlagen die Erfinder daher vor, daß Verfahren zur Bildung eines Ad-hoc-Netzwerkes als Verbindung zwischen einem lokalen Netzwerk mit seinen Diensten und einem Körpernetzwerk, dahingehend zu verbessern, dass mindestens ein Computer im lokalen Netzwerk die im lokalen Netzwerk befindlichen lokalen Dienste erfasst, in Jini-Dienste übersetzt und auf IP-Ebene, unter Verwendung von Jini-Middleware für Körpernetzwerke, anbietet.

Durch diese unbekannte Nutzung der Jini-Dienste und Integration in ein lokales Netzwerk wird es nun möglich die oben genannten Anforderungen zu erfüllen.

Vorteilhaft kann es hierbei sein, wenn der mindestens eine Computer, der die Jini-Dienste übersetzt, als Server im lokalen Netz dient. Jedoch besteht auch die Möglichkeit, dass es sich hierbei um einen Client des lokalen Netzwerkes oder um eine Basisstation eines Raumnetzwerkes handelt.

Zusätzlich schlagen die Erfinder vor, dass die Verbindung zwischen dem mindestens einen Computer, der Jini-Dienste übersetzt, und dem Körpernetzwerk drahtlos und/oder mit galvanischer Kopplung hergestellt wird, wobei der drahtlosen Verbindung, beispielsweise über Infrarot-Schnittstellen, Bluetooth-Schnittstellen oder ähnliche Systeme der Vorzug zu geben ist.

Handelt es sich bei dem lokalen Netzwerk um ein Netzwerk mit großer räumlicher Ausdehnung, so kann es vorteilhaft sein, dass dem im lokalen Netzwerk angebotenen Diensten ortsabhängige Attribute zugeordnet werden, so dass die Möglichkeit besteht, aufgrund der vorhandenen ortsabhängigen Attributen dem jeweiligen Gerät im Bereich eines Körpernetzwerkes die Ortsstruktur der angebotenen Dienste mitzuteilen, so dass gegebenenfalls bei einer Vielzahl von gleichartigen Diensten auf die ortsmäßig nächstgelegenen Dienste, zum Beispiel die Dienste des Raumes in dem man sich befindet, gezielt zugegriffen werden kann.

Hierzu schlagen die Erfinder auch vor, dass einem zu einem Körpernetz gehörenden Gerät, das mit dem lokalen Netzwerk in Verbindung steht, das gleiche ortsabhängige Attribut zugeordnet wird, wie dem Computer des lokalen Netzwerkes, über den die Verbindung zum Körpernetzwerk hergestellt wird. Durch diese Zuordnung der ortsabhängigen Attribute wird es nun aufgrund der definierten Lokalisierung der im gesamten Ad-hoc-Netzwerk befindlichen Dienste und Geräte diese in praktischer und räumlich sinnvoller Weise miteinander in Verbindung zu setzen.

So kann nun beispielsweise gezielt über ein PDA auf die Gebäudeautomatisation zugegriffen werden, um in dem Raum in dem man sich derzeit befindet die Temperatur oder die Beleuchtung zu regeln. Gleichzeitig kann auch im Gegenzug über das lokale Netzwerk eine Lokalisierung von Mitarbeitern im Unternehmensbereich oder sonstiger Personen vorgenommen werden, da im lokalen Netz die Ortsattribute der jeweiligen Person z.B. über ihr Handy vorliegt. Hierzu kann es besonders vorteilhaft sein, wenn die ortsabhängigen Attribute raumspezifisch ausgewählt werden, so dass eine einfache Raumangabe bei der Lokalisierung möglich ist.

Eine zusätzliche vorteilhafte Weiterbildung des Verfahrens liegt darin, dass jedem in einem Körpernetz befindlichen Gerät beim Vorhandensein mehrerer gleichartiger Dienste im lokalen Netzwerk jeweils die örtlich nächstgelegenen Dienste vorrangig oder ausschließlich angeboten werden. So kann beispielsweise die Struktur eines Gebäudes mit seinen Stockwerken und Abteilungen berücksichtigt werden. Hierdurch wird es dem Teilnehmer im Ad-hoc-Netzwerk wesentlich erleichtert, die für ihn örtlich günstig gelegene Dienste ausfindig zu machen.

Vorteilhaft ist es hierbei, wenn die ortsabhängigen Attribute hierarchisch entsprechend ihrer ortsabhängigen Nutzungsmöglichkeit definiert werden.

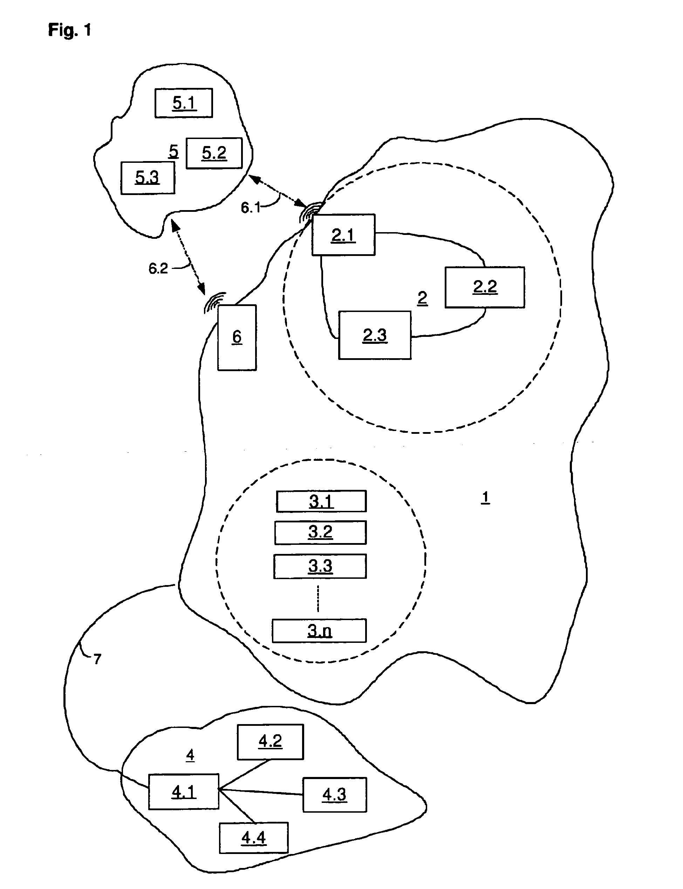

Im folgenden wird die Erfindung anhand eines bevorzugten Ausführungsbeispieles mit Hilfe einer einzigen Figur 1 näher beschrieben.

Die Figur 1 zeigt den schematischen Aufbau eines erfindungsgemäßen Ad-hoc-Netzwerkes, bestehend aus einem lokalen Netz (LAN) 1, einem mit diesem über Ethernet-Leitung 7 verbundenen Raumnetzwerk 4 und einem Körpernetzwerk 5.

Das Körpernetzwerk 5 weist ein Handy 5.1, ein Notebook 5.2 und PDA 5.3 (PDA = personal digital assistent = persönlicher digitale Assistent) auf, welche über eine WLAN-Basisstation 6 (WLAN=wireless lokal area network= drahtloses lokales Netzwerk), die sich im LAN 1 befindet, kommunizieren.

Andererseits besteht auch die Möglichkeit einer Kommunikation mit einem im LAN 1 integrierten Jini-Netzwerk 2, in dem sich beispielsweise ein Mitarbeiter-PC 2.1, ein Drucker 2.2 und ein Abteilungs-Server 2.3 befinden, die in ihrer Gesamtheit eine Untergruppe des LAN 1 darstellen.

Im LAN 1 befinden sich außerdem globale Jini-Dienste 3, wie beispielsweise ein Zugang zum Internet 3.1, ein Zugang zum Intranet 3.2, ein e-Mail-Dienst 3.3 oder ein Corporate Directory (unternehmensspezifisches Verzeichnis) 3.n. Diese Aufzählung ist natürlich nicht abschließend.

Die Verbindungsstrukturen innerhalb des lokalen Netzwerkes 1 sind bewußt offengehalten, da hierbei alle bekannte möglichen Netzwerke angewendet werden können. Die beispielhaft dargestellte Anbindung über ein Ethernet 7 des Raumnetzwerkes 4 soll ebenfalls die Erfindung nicht einschränken. In dem dargestellten Raumnetzwerk 4 befindet sich hier beispielsweise ein Jini-Proxy 4.1, über den ein Beamer 4.2, ein Telefon 4.3 und ein Faxgerät 4.4, die sich alle innerhalb eines Raumes befinden, angeschlossen sind.

Durch diesen Aufbau eines erfindungsgemäßen Ad-hoc-Netzwerkes ist es nun möglich, dass eine Person mit einem Körpernetzwerk aus individuellen elektronischen Geräten in den Bereich eines lokalen Netzwerkes eines Unternehmen eintritt und sofort alle ihm zustehenden Möglichkeiten der in diesem lokalen Netzwerk vorhandenen Dienste nutzen kann.

Ergänzend ist hierbei darauf hinzuweisen, daß unter dem Begriff "Unternehmensbereich" nicht nur ein wirtschaftliches Unternehmen zu verstehen ist, sondern dass auch beispielsweise zum Begriff "Unternehmen" auch ein Flughafen, ein Bahnhof, lokale Netze eines Schiffes, eines Flugzeuges oder Zuges oder sonstige lokale Strukturen wie öffentliche Gebäude oder auch ganze Ausstellungsgelände und sogar der Bereich einer Stadt zu verstehen sind.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Literaturverzeichnis

"Geistreiche Verbindungen, Intelligente Geräte in dezentralen Netzen", Claudia Piemont, c't 20/1998, Seite 198 - 202.
"JINI^{™} Architectural Overview", Technical White Paper, SUN microsystems, January 1999
   (beispielsweise zu finden unter http://www.sun.com/jini/)

## Patentansprüche

1. Ad-hoc-Netzwerk als Verbindung zwischen einem lokalen Netzwerk (1) mit seinen Diensten und mindestens einem Körpernetzwerk (5), in dem mindestens ein Computer (2.1) im lokalen Netzwerk die im lokalen Netzwerk befindlichen lokalen Dienste erfasst, in Jini-Dienste (3.x) übersetzt und auf IP-Ebene unter Verwendung von Jini-Middleware für Körpernetzwerke (5) anbietet,
**dadurch gekennzeichnet, dass**
zu dem Körpernetzwerk (5) gehörende Geräte (5.x) über eine WLAN-Basisstation (6) des lokalen Netzwerks miteinander kommunizieren und über die WLAN-Basisstation (6) mit dem lokalen Netzwerk (1) in Verbindung stehen, und
den, im lokalen Netzwerk (1) angebotenen Diensten ortsabhängige Attribute zugeordnet werden und
einem der zu dem Körpernetzwerk gehörenden Geräte (5.x), das gleiche ortsabhängige Attribut zugeordnet wird, wie der WLAN-Basisstation (6), über die die Verbindung zum Körpernetzwerk (5) hergestellt ist.

2. Ad-hoc-Netzwerk gemäß dem voranstehenden Patentanspruch 1, **dadurch gekennzeichnet, dass** der mindestens eine Computer (2.1), der die Jini-Dienste übersetzt, als Server im lokalen Netz dient.

3. Ad-hoc-Netzwerk gemäß dem voranstehenden Patentanspruch 1, **dadurch gekennzeichnet, dass** der mindestens eine Computer, der die Jini-Dienste übersetzt, als Client des lokalen Netzwerkes dient.

4. Ad-hoc-Netzwerk gemäß dem voranstehenden Patentanspruch 1, **dadurch gekennzeichnet, dass** der mindestens eine Computer (6), der die Jini-Dienste übersetzt, als Basisstation eines Raumnetzwerkes dient.

5. Ad-hoc-Netzwerk gemäß einem der voranstehenden Patentansprüche 1 bis 4, **dadurch gekennzeichnet, dass** die Verbindung zwischen dem mindestens einen Computer, der Jini-Dienste übersetzt, und dem Körpernetzwerk drahtlos und/oder mit galvanischer Kopplung hergestellt wird.

6. Ad-hoc-Netzwerk gemäß einem der voranstehenden Patentansprüche 1 bis 5, **dadurch gekennzeichnet, dass** die ortsabhängigen Attribute raumspezifisch ausgewählt werden.

7. Ad-hoc-Netzwerk gemäß einem der voranstehenden Patentansprüche 1 bis 6, **dadurch gekennzeichnet, dass** jedem in einem Körpernetz (5) befindlichen Gerät (5.x) beim Vorhandensein mehrerer gleichartiger Dienste (3.x) im lokalen Netzwerk jeweils die örtlich nächstgelegenen Dienste vorrangig oder ausschließlich angeboten werden.

8. Ad-hoc-Netzwerk gemäß einem der voranstehenden Patentansprüche 1 bis 7, **dadurch gekennzeichnet, dass** die ortsabhängigen Attribute hierarchisch entsprechend ihrer ortsabhängigen Nutzungsmöglichkeit definiert werden.

## Claims

1. Ad hoc network as a connection between a local area network (1) with its services and at least one body-worn network (5), in which at least one computer (2.1) in the local area network detects the local services located in the local area network, translates them into Jini services (3.x) and offers them on the IP plane with the use of Jini middleware for body-worn networks (5), **characterized in that** appliances (5.x) that belong to the body-worn network (5) communicate with each other via a WLAN base station (6) of the local area network and are connected via the WLAN base station (6) to the local area network (1), and the services offered in the local area network (1) are assigned location-dependent attributes and one of the appliances (5.x) that belongs to the body-worn network is assigned the same location-dependent attribute as the WLAN base station (6) via which the connection to the body-worn network (5) is set up.

2. Ad hoc network according to the preceding Patent Claim 1, **characterized in that** the at least one computer (2.1), which translates the Jini services, serves as server in the local area network.

3. Ad hoc network according to the preceding Patent Claim 1, **characterized in that** the at least one computer, which translates the Jini services, serves as client of the local area network.

4. Ad hoc network according to the preceding Patent Claim 1, **characterized in that** the at least one computer (6), which translates the Jini services, serves as base station of a room network.

5. Ad hoc network according to one of the preceding Patent Claims 1 to 4, **characterized in that** the connection between the at least one computer, which translates the Jini services, and the body-worn network is set up in a wireless fashion and/or with galvanic coupling.

6. Ad hoc network according one of the preceding Patent Claims 1 to 5, **characterized in that** the location-dependent attributes are selected in a room-specific fashion.

7. Ad hoc network according to one of the preceding Patent Claims 1 to 6, **characterized in that** given the presence of a plurality of similar services (3.x) in the local area network are offered respectively the services nearest in location as a matter of priority or exclusively to each appliance (5.x) located in a body-worn network (5).

8. Ad hoc network according to one of the preceding Patent Claims 1 to 7, **characterized in that** the location-dependent attributes are defined hierarchically in accordance with their location-dependent possibility of use.

## Revendications

1. Réseau ad-hoc en tant que liaison entre un réseau (1) local avec ses services et au moins un réseau physique (5), dans lequel au moins un ordinateur (2.1) détecte dans le réseau local les services locaux se trouvant dans le réseau local, les convertit en services Jini (3.x) et les offre au niveau IP en utilisant du Middleware Jini pour des réseaux physiques (5), **caractérisé en ce que** des appareils (5.x) appartenant au réseau physique (5) communiquent entre eux au moins d'une station de base WLAN (6) du réseau local (1) et sont en liaison par la station de base WLAN (6) avec le réseau local (1) et des attributs dépendants du lieu sont attribués aux services offerts dans le réseau (1) local et à l'un des appareils (5.x) appartenant au réseau physique est attribué le même attribut dépendant du lieu qu'à la station de base WLAN (6), par laquelle la liaison est établie avec le réseau physique (5).

2. Réseau ad-hoc selon la revendication 1 précédente, **caractérisé en ce que** le au moins un ordinateur (2.1), qui convertit les services Jini, sert de serveur dans le réseau local.

3. Réseau ad-hoc selon la revendication 1 précédente, **caractérisé en ce que** le au moins un ordinateur, qui convertit les services Jini, sert de client du réseau local.

4. Réseau ad-hoc selon la revendication 1 précédente, **caractérisé en ce que** le au moins un ordinateur (6), qui convertit les services Jini, sert de station de base d'un réseau local.

5. Réseau ad-hoc selon l'une quelconque des revendications 1 à 4 précédentes, **caractérisé en ce que** la liaison entre le au moins un ordinateur, qui convertit les services Jini, et le réseau physique est établie sans fil et/ou avec un couplage galvanique.

6. Réseau ad-hoc selon l'une quelconque des revendications 1 à 5 précédentes, **caractérisé en ce que** les attributs dépendant du lieu sont choisis de façon spécifiée au local.

7. Réseau ad-hoc selon l'une quelconque des revendications 1 à 6 précédentes, **caractérisé en ce que**, lors de la présence de plusieurs services (3.x) similaires dans le réseau local, à chaque fois les services les plus proches localement sont offerts en priorité ou exclusivement à chaque appareil (5.x) se trouvant dans un réseau physique (5).

8. Réseau ad-hoc selon l'une quelconque des revendications 1 à 7 précédentes, **caractérisé en ce que** les attributs dépendant du lieu sont définis de façon hiérarchique en fonction de leur possibilité d'utilisation dépendante du lieu.
